# EUROPÄISCHE PATENTSCHRIFT

(11) **EP 3 887 679 B1**
(45) Veröffentlichungstag und Bekanntmachung des Hinweises auf die Patenterteilung: **23.08.2023**
(21) Anmeldenummer: 19752160.2
(22) Anmeldetag: 05.08.2019
(51) Int. Cl.: F03D 80/50

(54) **WINDKRAFTANLAGE MIT HANDHABUNGSVORRICHTUNG FÜR EIN GETRIEBE**
WIND TURBINE COMPRISING A HANDLING DEVICE FOR A TRANSMISSION
ÉOLIENNE COMPRENANT UN DISPOSITIF DE MANUTENTION D'UNE TRANSMISSION

(30) Priorität: 11.09.2018 DE 102018215402
(43) Veröffentlichungstag der Anmeldung: 06.10.2021
(73) Patentinhaber: ZF Friedrichshafen AG, 88046 Friedrichshafen (DE)
(72) Erfinder: BEN HADDOU, Adil, 44879 Bochum (DE); FISCHER, Steffen, 59394 Nordkirchen-Südkirchen (DE); VAN ROMPAYEV, Kris, 88046 Friedrichshafen (DE)
(74) Vertreter: ZF Friedrichshafen AG
(86) Internationale Anmeldenummer: PCT/EP2019/071041
(87) Internationale Veröffentlichungsnummer: WO 2020/052863

(56) Entgegenhaltungen:
- US-A1- 2012 228 839
- US-A1- 2014 334 908

## Beschreibung

Die Erfindung betrifft eine Windkraftanlage nach Anspruch 1, ein Verfahren nach Anspruch 3 und ein Verfahren nach Anspruch 10.

Die Montage oder Demontage eines Getriebes einer Windkraftanlage gestaltet sich insbesondere in Wartungs- oder Reparaturfall aufwendig. Ohne das Getriebe zu zerlegen, muss es aus dem Turm der Windkraftanlage entfernt werden. Bei hohen und schlecht erreichbaren Windkraftanlagen, insbesondere bei Offshore-Anlagen verursacht die Reparatur und Wartung der Getriebe daher hohe Kosten.

Aus dem Stand der Technik sind Handhabungsvorrichtungen für Windkraftgetriebe bekannt, die in Montagehallen verwendet werden. Die Handhabungsvorrichtungen dienen dazu, ein Getriebe zur Montage zu fixieren. Zum Einsetzen der Innereien des Getriebes wird das Getriebegehäuse in die Handhabungsvorrichtung eingespannt und in eine vertikale Position gebracht. Es wird Kran benötigt, mit dem das Getriebegehäuse in die Vorrichtung gehoben wird. Eine Verwendung im Turm einer Windkraftanlage ist daher nicht möglich.

US 2012/228839 offenbart einen Schlitten zum Transport eines Flugzeugtriebwerkmoduls von einer Vorbereitungsstation zu einer Montagestation. Der Schlitten ist horizontal beweglich und weist zwei vertikal bewegliche Stützen mit kippbaren Aufnahmen für das Triebwerksmodul auf.

Aus US 2014/334908 ist eine Vorrichtung zum Bewegen einer Antriebsstrangkomponente in einer Gondel einer Windkraftanlage entlang einer Drehachse eines Rotors der Windkraftanlage bekannt.

Der Erfindung liegt die Aufgabe zugrunde, eine Windkraftanlage mit einer Handhabungsvorrichtung verfügbar zu machen, die die aus dem Stand der Technik bekannten Lösungen innewohnenden Nachteile nicht aufweist. Insbesondere soll die Reparatur und Wartung des Getriebes vereinfacht werden. Diese Aufgabe wird gelöst durch eine Windkraftanlage nach dem

Oberbegriff von Anspruch 1, ein Verfahren nach Anspruch 3 und ein Verfahren nach Anspruch 10.

Die Windkraftanlage umfasst eine Handhabungsvorrichtung mit einer ersten Säule, einer zweiten Säule, einer ersten Aufnahme für ein Getriebe und einer zweiten Aufnahme für das Getriebe auf. Bei den Aufnahmen für das Getriebe handelt es sich um Vorrichtungen zum Einspannen mindestens eines Teils des Getriebes. Bevorzugt wird das Getriebe mit seinem Gehäuse oder einem Teil seines Gehäuses in die Aufnahmen eingespannt.

Bei den Säulen handelt es sich um Vorrichtungen, in denen die Aufnahmen verdrehbar und translatorisch verfahrbar fixiert sind. So ist die erste Aufnahme in der ersten Säule verdrehbar und translatorisch verfahrbar fixiert. Die zweite Aufnahme ist in der zweiten Säule verdrehbar und translatorisch verfahrbar fixiert. Die zweite Säule ist parallel zu der ersten Säule, die erste Säule entsprechend parallel zu der zweiten Säule translatorisch verfahrbar.

Die Handhabungsvorrichtung weist ferner eine erste Schiene und eine zweite Schiene auf. Bei den Schienen handelt es sich um Vorrichtungen, in denen die erste Säule und die zweite Säule translatorisch verfahrbar fixiert sind. So ist die die erste Säule in der ersten Schiene und die zweite Säule in der zweiten zweiten Schiene translatorisch verfahrbar fixiert. Die zweite Säule ist dabei parallel zu der ersten Säule, die erste Säule entsprechend parallel zu der zweiten Säule verfahrbar.

Damit ein Getriebe, dass in die Aufnahmen eingespannt ist, verdreht werden kann, müssen die Drehachsen der Aufnahmen fluchten. Die Drehachsen der ersten Aufnahme und der zweiten Aufnahme sind daher so ausgerichtet, dass sie - wenn die Aufnahme nicht bereits in einer Position sind, in der die beiden Drehachsen fluchten, durch Verfahren der ersten Aufnahme, der zweiten Aufnahme, der ersten Säule und/oder der zweiten Säule in Flucht gebracht werden können.

Die Handhabungsvorrichtung eignet sich für die Verwendung im Turm der Windkraftanlage. Durch die Verfahrbarkeit der Säulen ist es möglich, ein eingebautes Getriebe ohne einen Kran aus seiner Einbauposition zu entfernen und in eine Serviceposition zu überführen. Das Getriebe verbleibt dabei im Turm der Windkraftanlage.

Die erste Aufnahme ist bevorzugt orthogonal zu der ersten Schiene und damit orthogonal zu einer Richtung der Verfahrbarkeit der ersten Säule verfahrbar. Entsprechend ist die zweite Aufnahme bevorzugt orthogonal zu der zweiten Schiene und damit orthogonal zu einer Richtung der Verfahrbarkeit der zweiten Säule verfahrbar. Weiterhin verlaufen die Drehachsen der Aufnahmen bevorzugt orthogonal zu Richtungen der Verfahrbarkeit sowohl der Aufnahmen als auch der Säulen.

In einer bevorzugten Weiterbildung weist die Handhabungsvorrichtung mindestens ein Mittel zum Synchronisieren der Verfahrbewegungen der Aufnahmen und/oder der Säulen auf. Bei dem Mittel zum Synchronisieren handelt es sich um ein Mittel, das die Geschwindigkeiten der Verfahrbewegungen der Aufnahmen und/oder der Säulen in gegenseitiger Abhängigkeit steuert oder regelt. Die beiden Aufnahmen werden dabei bevorzugt jederzeit mit gleicher Geschwindigkeit verfahren und verdreht. Entsprechend werden die beiden Säulen bevorzugt jederzeit mit gleicher Geschwindigkeit verfahren.

Die erste Schiene und die zweite Schiene der Handhabungsvorrichtung sind in einem Maschinenträger der Windkraftanlage fixiert.

Bevorzugt ist das Mittel zum Synchronisieren derart weitergebildet, dass eine Bewegung der Aufnahmen mindestens zeitweise parallel zu einer Drehachse eines Rotors der Windkraftanlage oder einer Eingangswelle des Getriebes erfolgt. Eine derartige Bewegung ermöglicht es, das Getriebe zur Montag in entsprechende Verschraubungen einzuführen oder es zur Demontage aus den Verschraubungen zu entfernen.

Eine erfindungsgemäßes Verfahren dient zur Montage eines Getriebes der oben beschriebenen Windkraftanlage und umfasst die folgenden Schritte:
- Einspannen mindestens einen Teil des Getriebes in die Aufnahme;
- Überführen des mindestens einen Teil des Getriebes in die Einbauposition;
- Fixieren des mindestens einen Teils in der Windkraftanlage.

Der mindestens eine Teil der Getriebes wird dabei durch Verfahren der ersten Säule in der ersten Schiene, der zweiten Säule in der zweiten Schiene, der ersten Aufnahme in der ersten Säule und/oder der zweiten Aufnahme in der zweiten Säule in die Einbauposition überführt. Die einzelnen Bewegungen können nacheinander oder simultan ausgeführt werden.

Bei der Einbauposition handelt es sich um eine Position des mindestens einen Teils des Getriebes im eingebauten Zustand, d.h. in einem Zustand, in dem das Getriebe in die Windkraftanlage eingebaut ist.

Die einzelnen Verfahrensschritte werden bevorzugt in folgender Reihgenfolge ausgeführt.

Um den mindestens einen Teil des Getriebes in die Aufnahmen einzuspannen, werden die Aufnahmen in einer bevorzugten Weiterbildung zuvor durch Verfahren der ersten Säule in der ersten Schiene, der zweite Säule in der zweiten Schiene, der ersten Aufnahme in der ersten Säule und/oder der zweiten Aufnahme in der zweiten Säule so positioniert, dass ihre Drehachsen fluchten.

In einer darüber hinaus bevorzugten Weiterbildung wird der mindestens eine Teil des Getriebes so eingespannt, dass er eine Serviceposition einnimmt. Die Serviceposition unterscheidet sich von der Einbauposition. Es handelt sich um eine beliebig wählbare Position, die dazu dient, Montagearbeiten zu vereinfachen bzw. zu ermöglichen. Insbesondere kann der mindestens eine Teil des Getriebes in der Serviceposition vertikal ausgerichtet sein, Dies bedeutet, dass eine Achse des mindestens einen Teils des Getriebes, etwa eine Drehachse einer Komponenten des Getriebes oder eine Mittel- oder Symmetrieachse des mindestens einen Teils, horizontal ausgerichtet ist.

Nach dem Einspannen und gegebenenfalls Ausrichten werden in einer bevorzugten Weiterbildung weitere Teile des Getriebes an oder in dem mindestens einen Teil montiert.

Anschließend wird der mindestens eine Teil des Getriebes in einer bevorzugten Weiterbildung durch Verdrehen der Aufnahmen derart positioniert, dass die Drehachse des Rotors und die obengenannte Achse des mindestens einen Teil parallel verlaufen oder fluchten.

Um den mindestens einen Teil des Getriebes in die Einbauposition zu überführen, werden darüber hinaus in einer bevorzugten Weiterbildung die Aufnahmen und/oder die Säulen translatorisch verfahren. Eine derartige Verfahrbewegung erfolgt bevorzugt derart, dass eine Bewegung des mindestens einen Teils parallel zu der Drehachse des Rotors resultiert.

In der Einbauposition schließlich wird der mindestens eine Teil des Getriebes in der Windkraftanlage, etwa in deren Maschinenträger und/oder in einem Rotor oder einer Hauptwelle fixiert.

Zur Überführung des mindestens einen Teil des Getriebes von der Einbauposition in die Serviceposition werden die oben beschriebenen Verfahrensschritte bevorzugt in umgekehrter Reihenfolge und in umgekehrter Richtung bzw. mit umgekehrtem Vorzeichen der Bewegungen ausgeführt. Ein entsprechendes erfindungsgemäßes Verfahren umfasst die folgenden Verfahrensschritte:
Einspannen des mindestens einen Teil des Getriebes in die Aufnahmen;
Lösen der Fixierung des mindestens einen Teil des Getriebes; und
Überführen des mindestens einen Teil des Getriebes in die Serviceposition.

Der mindestens eine Teil der Getriebes wird dabei durch Verfahren der ersten Säule in der ersten Schiene, der zweiten Säule in der zweiten Schiene, der ersten Aufnahme in der ersten Säule und/oder der zweiten Aufnahme in der zweiten Säule in die Serviceposition überführt. Die einzelnen Bewegungen können nacheinander oder simultan ausgeführt werden.

Beim Einspannen des mindestens einen Teil des Getriebes befindet sich das Getriebe in der Einbauposition. Zum Einspannen werden die Aufnahmen geeignet verfahren.

Der Ausbau des Getriebes, d.h. dessen Überführung von der Einbauposition in die Serviceposition gestaltet sich in bevorzugten Weiterbildung durch Verfahren der Aufnahme oder der Säulen derart, dass sich eine translatorische Bewegung des mindestens einen Teil des Getriebes resultiert und/oder durch Verdrehen der Aufnahmen.

Ein bevorzugtes Ausführungsbeispiel der Erfindung ist in den Figuren dargestellt. Im Einzelnen zeigt:

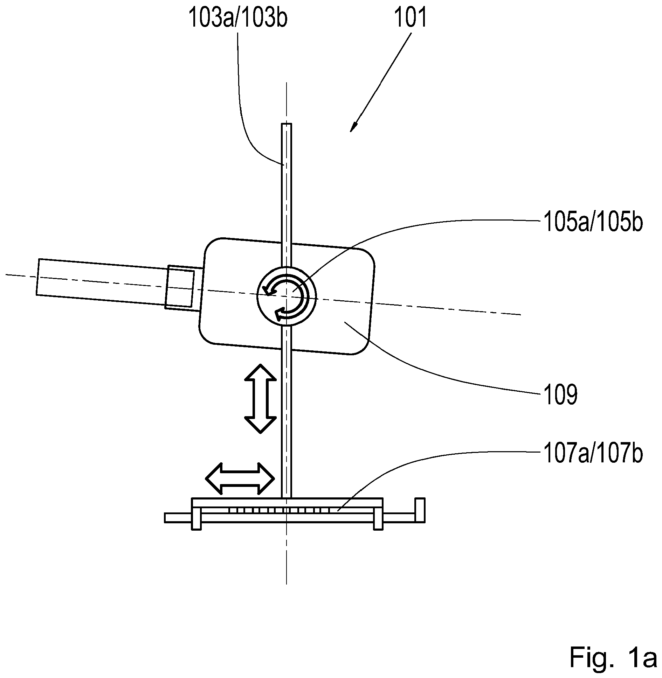

- Fig. 1a: eine Handhabungsvorrichtung in der Seitenansicht;

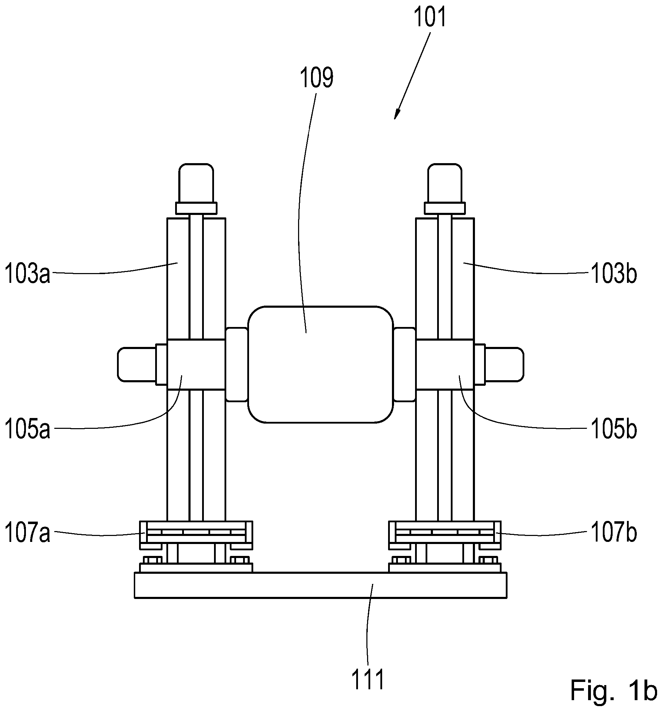

- Fig. 1b: die Handhabungsvorrichtung in der Front- oder Rückansicht.

Die in den Figuren 1a und 1b dargestellte Handhabungsvorrichtung 101 umfasst eine erste Säule 103a, eine zweite Säule 103b, eine erste Aufnahme 105a, eine zweite Aufnahme 105b, eine erste Schiene 107a und eine zweite Schiene 107b. In die beiden Aufnahmen 105a, 105b ist ein Getriebe 109 eingespannt.

Die Säulen 103a, 103b sind orthogonal zu den Schienen 107a, 107b ausgerichtet und horizontal verfahrbar in diesen fixert. Dies ermöglicht eine horizontale Verfahrbewegung des Getriebes 109.

Weiterhin sind die Aufnahmen 105a, 105b vertikal verfahrbar in den Säulen 103a, 103b fixiert. Dies ermöglicht eine vertikale Verfahrbewegung des Getriebe 109.

In den Aufnahmen 105a, 105b ist das Getriebe 109 um eine vertikale Querachse, d.h. um eine vertikale Achse, die orthogonal zu einer Längsachse des Getriebes verläuft, verkippbar.

Die beschriebenen Verfahr- und Kippbewegungen der Säulen 103a, 103b und der Aufnahmen 105a, 105b lassen sich einzeln ausführen. Auch eine überlagerte Ausführung einiger oder aller Bewegungen ist möglich.

Die Schienen 107a, 107b sind durch Verschraubungen in einem Maschinenträger 111 einer Windkraftanlage fixiert.

### Bezugszeichen

- 101: Handhabungsvorrichtung
- 103a: erste Säule
- 103b: zweite Säule
- 105a: erste Aufnahme
- 105b: zweite Aufnahme
- 107a: erste Schiene
- 107b: zweite Schiene
- 109: Getriebe
- 111: Maschinenträger

## Patentansprüche

1. Windkraftanlage; umfassend:
eine Handhabungsvorrichtung (101) für ein Getriebe (109), mit einer ersten Säule (103a), einer zweiten Säule (103b), einer ersten Aufnahme (105a) für das Getriebe (109), einer zweiten Aufnahme (105b) für das Getriebe (109), einer ersten Schiene (107a) und einer zweiten Schiene (107b); wobei
die erste Aufnahme (105a) in der ersten Säule (103a) verdrehbar und translatorisch verfahrbar fixiert ist; wobei
zweite Aufnahme (105b) in der zweiten Säule (103b) verdrehbar und parallel zu der ersten Aufnahme (105a) translatorisch verfahrbar fixiert ist; wobei die erste Säule (103a) in der ersten Schiene (107a) translatorisch verfahrbar fixiert ist; wobei
die zweite Säule (103b) in der zweiten Schiene (107b) translatorisch parallel zu der ersten Säule (103a) verfahrbar ist; und wobei
die Drehachsen der Aufnahmen (105a, 105b) fluchten oder so ausgerichtet sind, dass sie durch Verfahren der ersten Aufnahme (105a), der zweiten Aufnahme (105b), der ersten Säule (103a) und/oder der zweiten Säule (103b) in Flucht gebracht werden können; wobei
die erste Schiene (107a) und die zweite Schiene (107b) der Handhabungsvorrichtung (101) in einem Maschinenträger (111) der Windkraftanlage fixiert sind.

2. Windkraftanlage nach dem vorhergehenden Anspruch, umfassend mindestens ein Mittel zum Synchronisieren der Verfahrbewegungen der Aufnahmen (105a, 105b) und/ oder der Säulen (103a, 103b), wobei die Verfahrbewegungen der Aufnahmen (105a, 105b) und der Säulen (103a, 103b) derart syncronisiert werden, dass eine Bewegung der Aufnahmen (105a, 105b) mindestens zeitweise parallel zu einer Drehachse eines Rotors der Windkraftanlage oder einer Eingangswelle des Getriebes resultiert.

3. Verfahren zur Montage eines Getriebes einer Windkraftanlage nach einem der vorhergehenden Ansprüche; mit den Schritten
- Einspannen mindestens eines Teils des Getriebes (109) in die Aufnahmen (105a, 105b);
- Überführen des mindestens einen Teils des Getriebes (109) in eine Einbauposition; und
- Fixieren des mindestens einen Teils des Getriebes (109) in der Windkraftanlage.

4. Verfahren nach dem vorhergehenden Anspruch; **dadurch gekennzeichnet, dass** die Aufnahmen (105a, 105b) zum Einspannen des mindestens einen Teils des Getriebes (109) so positioniert werden, dass ihre Drehachse fluchten.

5. Verfahren nach einem der vorhergehenden Verfahrensansprüche; **dadurch gekennzeichnet, dass**
der mindestens eine Teil des Getriebes (111) so eingespannt wird, dass er eine Serviceposition einnimmt.

6. Verfahren nach einem der vorhergehenden Verfahrensansprüche; **dadurch gekennzeichnet, dass**
nach dem Einspannen weitere Teile des Getriebes (111) an oder in dem mindestens einen Teil montiert werden.

7. Verfahren nach einem der vorhergehenden Verfahrensansprüche; **dadurch gekennzeichnet, dass**
das der mindestens eine Teil des Getriebes (111) durch Verdrehen der Aufnahmen (105a, 105b) derart positioniert wird, dass die Drehachse des Rotors und eine Dreh- und/oder Mittelachse des mindestens einen Teils des Getriebes (109) parallel verlaufen und/oder fluchten.

8. Verfahren nach dem vorhergehenden Anspruch; **dadurch gekennzeichnet, dass** die Aufnahmen (105a, 105b) und/oder die Säulen (103a, 103b) derart verfahren werden, dass eine translatorische Bewegung des mindestens einen Teils des Getriebes in eine Einbauposition resultiert.

9. Verfahren nach einem der vorhergehenden Verfahrensansprüche; **dadurch gekennzeichnet, dass**
der mindestens eine Teil des Getriebes (109) in der Einbauposition in der Windkraftanlage fixiert wird.

10. Verfahren zur Demontage eines Getriebes einer Windkraftanlage nach einem der Ansprüche 1 oder 2; wobei
mindestens ein Teil des Getriebes (109) zunächst in der Windkraftanlage fixiert ist; mit den Schritten
- Einspannen des mindestens eines Teils des Getriebes (19) in die Aufnahmen (105a, 105b);
- Lösen der Fixierung des mindestens einen Teils des Getriebes (109); und
- Überführen des mindestens einen Teils des Getriebes (109) in eine Serviceposition;

11. Verfahren nach dem vorhergehenden Anspruch; **dadurch gekennzeichnet, dass** die Aufnahmen (105a, 105b) und/oder die Säulen (103a, 103b) derart verfahren werden, dass eine translatorische Bewegung des mindestens einen Teils des Getriebes (109) aus der Einbauposition heraus resultiert.

12. Verfahren nach einem der Ansprüche 10 oder 11; **dadurch gekennzeichnet, dass** das der mindestens eine Teil des Getriebes (109) durch Verdrehen der Aufnahmen (105a, 105b) in eine Serviceposition überführt wird.

13. Verfahren nach dem vorhergehenden Anspruch; **dadurch gekennzeichnet, dass** dem mindestens einen Teil in der Serviceposition weitere Teile des Getriebes (109) entnommen werden.

## Claims

1. Wind turbine, comprising:
a handling device (101) for a gearbox (109), having a first column (103a), a second column (103b), a first holder (105a) for the gearbox (109), a second holder (105b) for the gearbox (109), a first rail (107a) and a second rail (107b), wherein
the first holder (105a) is fixed in the first column (103a) so as to be rotatable and displaceable in translation, wherein
the second holder (105b) is fixed in the second column (103b) so as to be rotatable and displaceable in translation parallel to the first holder (105a), wherein the first column (103a) is fixed in the first rail (107a) so as to be displaceable in translation, wherein
the second column (103b) is displaceable in translation in the second rail (107b) parallel to the first column (103a), and wherein
the axes of rotation of the holders (105a, 105b) are aligned or are oriented such that they can be brought into alignment by displacing the first holder (105a), the second holder (105b), the first column (103a) and/or the second column (103b), wherein
the first rail (107a) and the second rail (107b) of the handling device (101) are fixed in a machinery carrier (111) of the wind turbine.

2. Wind turbine according to the preceding claim, comprising at least one means for synchronizing the displacement movements of the holders (105a, 105b) and/or of the columns (103a, 103b), wherein
the displacement movements of the holders (105a, 105b) and of the columns (103a, 103b) are synchronized in such a manner as to cause the holders (105a, 105b) to move, at least temporarily, parallel to an axis of rotation of a rotor of the wind turbine or an input shaft of the gearbox.

3. Method for mounting a gearbox of a wind turbine according to either of the preceding claims, having the steps of:
- clamping at least one part of the gearbox (109) in the holders (105a, 105b),
- transferring the at least one part of the gearbox (109) into an installation position, and
- fixing the at least one part of the gearbox (109) in the wind turbine.

4. Method according to the preceding claim, **characterized in that** the holders (105a, 105b), in order to clamp the at least one part of the gearbox (109), are positioned such that their axes of rotation are aligned.

5. Method according to either of the preceding method claims, **characterized in that** the at least one part of the gearbox (111) is clamped such that it assumes a service position.

6. Method according to one of the preceding method claims, **characterized in that**, after the clamping operation, other parts of the gearbox (111) are mounted on or in the at least one part.

7. Method according to one of the preceding method claims, **characterized in that**, by rotating the holders (105a, 105b), the at least one part of the gearbox (111) is positioned in such a manner that the axis of rotation of the rotor and an axis of rotation and/or centre axis of the at least one part of the gearbox (109) run parallel and/or are aligned.

8. Method according to the preceding claim, **characterized in that** the holders (105a, 105b) and/or the columns (103a, 103b) are displaced in such a manner as to cause the at least one part of the gearbox to move in translation into an installation position.

9. Method according to one of the preceding method claims, **characterized in that** the at least one part of the gearbox (109) is fixed in the wind turbine in the installation position.

10. Method for removing a gearbox of a wind turbine according to either of Claims 1 and 2, wherein
at least one part of the gearbox (109) is initially fixed in the wind turbine,
having the steps of
- clamping the at least one part of the gearbox (19) in the holders (105a, 105b),
- releasing the fixing of the at least one part of the gearbox (109), and
- transferring the at least one part of the gearbox (109) into a service position.

11. Method according to the preceding claim, **characterized in that** the holders (105a, 105b) and/or the columns (103a, 103b) are displaced in such a manner as to cause the at least one part of the gearbox (109) to move in translation out of the installation position.

12. Method according to either of Claims 10 and 11, **characterized in that**, by rotating the holders (105a, 105b), the at least one part of the gearbox (109) is transferred into a service position.

13. Method according to the preceding claim, **characterized in that** other parts of the gearbox (109) are removed from the at least one part in the service position.

## Revendications

1. Éolienne ; comprenant :
un dispositif de manipulation (101) pour une transmission (109), comportant une première colonne (103a), une deuxième colonne (103b), un premier logement (105a) pour la transmission (109), un deuxième logement (105b) pour la transmission (109), un premier rail (107a) et un deuxième rail (107b) ; dans laquelle
le premier logement (105a) est fixé dans la première colonne (103a) de manière déplaçable en rotation et en translation ; dans laquelle
le deuxième logement (105b) est fixé dans la deuxième colonne (103b) de manière déplaçable en rotation et en translation parallèlement au premier logement (105a) ; dans laquelle
la première colonne (103a) est fixée dans le premier rail (107a) de manière déplaçable en translation ; dans laquelle
la deuxième colonne (103b) est fixée dans le deuxième rail (107b) de manière déplaçable en translation parallèlement à la première colonne (103a) ; et dans laquelle
les axes de rotation des logements (105a, 105b) sont alignés ou sont orientés de telle sorte qu'ils peuvent être amenés en alignement par déplacement du premier logement (105a), du deuxième logement (105b), de la première colonne (103a) et/ou de la deuxième colonne (103b) ; dans laquelle
le premier rail (107a) et le deuxième rail (107b) du dispositif de manipulation (101) sont fixés dans un support de machine (111) de l'éolienne.

2. Éolienne selon la revendication précédente, comprenant au moins un moyen de synchronisation des mouvements de déplacement des logements (105a, 105b) et/ou des colonnes (103a, 103b), dans laquelle les mouvements de déplacement des logements (105a, 105b) et des colonnes (103a, 103b) sont synchronisés de telle sorte qu'il en résulte un mouvement des logements (105a, 105b) au moins temporairement parallèlement à un axe de rotation d'un rotor de l'éolienne ou à un arbre d'entrée de la transmission.

3. Procédé de montage d'une transmission d'une éolienne selon l'une des revendications précédentes ; comportant les étapes suivantes
- serrage d'au moins une partie de la transmission (109) dans les logements (105a, 105b) ;
- transfert de l'au moins une partie de la transmission (109) dans une position d'installation ; et
- fixation de l'au moins une partie de la transmission (109) dans l'éolienne.

4. Procédé selon la revendication précédente ; **caractérisé en ce que** les logements (105a, 105b) sont, pour le serrage de l'au moins une partie de la transmission (109), positionnés de telle sorte que leurs axes de rotation soient alignés.

5. Procédé selon l'une des revendications précédentes ; **caractérisé en ce que**
l'au moins une partie de la transmission (111) est serrée de telle sorte qu'elle adopte une position de service.

6. Procédé selon l'une des revendications précédentes ; **caractérisé en ce**
**qu'**après le serrage, d'autres parties de la transmission (111) sont montées sur ou dans l'au moins une partie.

7. Procédé selon l'une des revendications précédentes ; **caractérisé en ce que**
l'au moins une partie de la transmission (111) est positionnée par rotation des logements (105a, 105b) de telle sorte que l'axe de rotation du rotor et un axe de rotation et/ou central de l'au moins une partie de la transmission (109) s'étendent parallèlement et/ou soient alignés.

8. Procédé selon la revendication précédente ; **caractérisé en ce que** les logements (105a, 105b) et/ou les colonnes (103a, 103b) sont déplacés de telle sorte qu'il en résulte un mouvement de translation de l'au moins une partie de la transmission dans une position d'installation.

9. Procédé selon l'une des revendications précédentes ; **caractérisé en ce que**
l'au moins une partie de la transmission (109) est fixée dans l'éolienne dans la position d'installation.

10. Procédé de démontage d'une transmission d'une éolienne selon l'une des revendications 1 ou 2 ; dans lequel
au moins une partie de la transmission (109) est tout d'abord fixée dans l'éolienne ; comportant les étapes suivantes
- serrage de l'au moins une partie de la transmission (19) dans les logements (105a, 105b) ;
- relâchement de la fixation de l'au moins une partie de la transmission (109) ; et
- transfert de l'au moins une partie de la transmission (109) dans une position de service.

11. Procédé selon la revendication précédente ; **caractérisé en ce que** les logements (105a, 105b) et/ou les colonnes (103a, 103b) sont déplacés de telle sorte qu'il en résulte un mouvement de translation de l'au moins une partie de la transmission (109) hors de la position d'installation.

12. Procédé selon l'une des revendications 10 ou 11 ; **caractérisé en ce que** l'au moins une partie de la transmission (109) est transférée à une position de service par rotation des logements (105a, 105b).

13. Procédé selon la revendication précédente ; **caractérisé en ce que** d'autres parties de la transmission (109) sont retirées de l'au moins une partie dans la position de service.
